# EUROPÄISCHE PATENTANMELDUNG

(11) **EP 3 064 793 A1**
(43) Veröffentlichungstag der Anmeldung: **07.09.2016**
(21) Anmeldenummer: 15157369.8
(22) Anmeldetag: 03.03.2015
(51) Int. Cl.: F16D 1/06, G01P 1/04, G01P 1/02, G01D 11/24, G01D 5/347, G01P 3/481

(54) **Bewegungssensorsystem für Schienenfahrzeuge**

(71) Anmelder: Baumer Electric AG, 8500 Frauenfeld (CH)
(72) Erfinder: Hohl, Michael, 8405 Winterthur (CH); Tille, Dierk, 78464 Konstanz (DE)
(74) Vertreter: Strauss, Steffen

(57) **Zusammenfassung**

Die Erfindung betrifft ein Bewegungssensorsystem (1) zur Montage an der Achse eines Schienenfahrzeugs, mit wenigstens einer durch die Achse des Schienenfahrzeugs drehbaren ersten Welle (19) und mit wenigstens einer mit der ersten Welle (19) drehfest verbundenen Maßverkörperung (27) eines ersten Drehbewegungssensors (3), wobei die erste Welle (19) ein Abtriebselement (21) zum Abgreifen der Bewegung der Achse aufweist. Um ein Bewegungssensorsystem (1) bereitzustellen, das eine hohe Flexibilität aufweist, das die Erfassung verschiedener Parameter ermöglichen kann, und das kompakt ist, ist erfindungsgemäß vorgesehen, dass die erste Welle (19) zur Übertragung eines Drehmoments an einen zweiten Drehbewegungssensor (5) ausgestaltet ist. Mit Hilfe eines Kupplungsteils an der ersten Welle kann eine Verbindung zu einer Welle des zweiten Drehbewegungssensors hergestellt werden. Alternativ kann eine Maßverkörperung des zweiten Drehbewegungssensors auf die erste Welle aufgebracht werden. Die Anmeldung gestattet eine modulare Ausgestaltung eines solchen Sensorsystems, bei der bei Bedarf einzelne Komponenten ausgetauscht oder weggelassen werden können.

## Beschreibung

Die Erfindung betrifft ein Bewegungssensorsystem zur Montage an der Achse eines Schienenfahrzeugs, mit wenigstens einer durch die Achse des Schienenfahrzeugs drehbaren ersten Welle und mit wenigstens einer mit der ersten Welle drehfest verbundenen Maßverkörperung eines ersten Drehbewegungssensors, wobei die erste Welle ein Abtriebselement zum Abgreifen der Bewegung der Achse aufweist. Die Erfindung betrifft zudem eine Achse für ein Schienenfahrzeug.

Bewegungssensorsysteme sind wichtige Bestandteile von modernen Schienenfahrzeugen. Bewegungssensorsysteme können eingesetzt werden, um Drehungen der Achsen von Schienenfahrzeugen zu detektieren, zu analysieren und zu kontrollieren. Bekannte Drehbewegungssensoren werden häufig so an feststehenden Teilen des Schienenfahrzeugs befestigt, dass die Achse des Schienenfahrzeugs ihre Drehbewegung an die Welle des Drehbewegungssensors übertragen kann. Nachteilig bei den bekannten Drehbewegungssensoren ist jedoch, dass diese häufig jeweils nur Informationen über einzelne Parameter der Drehbewegung der Achse des Schienenfahrzeugs liefern können. Zudem weisen bekannte Drehbewegungssensoren ein großes Volumen auf.

Es ist daher Aufgabe der Erfindung, ein Bewegungssensorsystem der oben genannten Art bereitzustellen, das zur umfassenderen Analyse der Drehbewegung der Achse des Schienenfahrzeugs ausgestaltet ist, das kompakt ist und das zudem eine sichere Übertragung der Drehbewegung der Achse des Schienenfahrzeugs wenigstens auf die Maßverkörperung des ersten Drehbewegungssensors ermöglicht.

Diese Aufgabe ist für ein Bewegungssensorsystem der oben genannten Art erfindungsgemäß dadurch gelöst, dass die erste Welle zur Übertragung eines Drehmoments an einen zweiten Drehbewegungssensor ausgestaltet ist.

Die erfindungsgemäße Lösung erlaubt es, einen zweiten Drehbewegungssensor mit dem ersten Drehbewegungssensor zu koppeln. Dadurch kann ein Bewegungssensorsystem aus zwei Drehbewegungssensoren gebildet sein, wovon jeder Drehbewegungssensor jeweils für die Erfassung unterschiedlicher Parameter ausgestaltet sein kann. Da ein zweiter Drehbewegungssensor das Drehmoment von der ersten Welle übertragen bekommt, kann das Bewegungssensorsystem sehr kompakt aufgebaut sein und zudem an einem Ende der Achse des Schienenfahrzeugs angebracht sein. So können an einem Achsende verschiedene Parameter abgegriffen werden.

Die genannten Drehbewegungssensoren können jeweils aus einer zugehörigen Maßverkörperung und wenigstens einem dazugehörigen Abfrageelement bestehen. Zusätzlich können die Drehbewegungssensoren Sensorkomponenten wie Auswerte- bzw. Steuereinheiten aufweisen. Die Übertragung des Drehmoments bzw. der Drehbewegung an den zweiten Drehbewegungssensor kann an einem Ende der ersten Welle erfolgen, welches in Achsrichtung der Welle gegenüber dem Abtriebselement liegt.

Für die eingangs genannte Achse für ein Schienenfahrzeug ist die erfindungsgemäße Aufgabe dadurch gelöst, dass die Achse an einem Achsende ein erfindungsgemäßes Bewegungssensorsystem aufweist. Die Achse des Schienenfahrzeugs muss dadurch nur an einem Achsende zur Übertragung ihres Drehmoments an ein Bewegungssensorsystem ausgestaltet sein. Dadurch können Kosten gespart werden.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

Gemäß einer ersten vorteilhaften Ausgestaltung eines erfindungsgemäßen Bewegungssensorsystems kann das Abtriebselement durch ein sich an einem achsseitigen Ende der ersten Welle befindliche Mitnehmerorgan gebildet sein. Das Mitnehmerorgan kann dazu ausgestaltet sein, die Bewegung der Achse des Schienenfahrzeugs abzugreifen und auf die Welle zu übertragen. Insbesondere kann das Mitnehmerorgan mit einem Antriebselement der Achse des Schienenfahrzeugs in Eingriff stehen, wenn das Bewegungssensorsystem an der Achse montiert ist. Das Mitnehmerorgan kann insbesondere durch eine Mitnehmerscheibe gebildet sein, wobei eine Scheibenebene senkrecht zur Wellenachse angeordnet ist.

Um eine besonders sichere Verbindung zwischen dem Mitnehmerorgan und der ersten Welle zu erhalten, kann das Mitnehmerorgan mit dem achsseitigen Ende der ersten Welle verpresst sein. Diese Art der Verbindung ist zudem kostengünstig herstellbar. Das Mitnehmerorgan, insbesondere eine Mitnehmerscheibe kann dazu eine Aufnahmeöffnung aufweisen, durch die die Welle im verpressten Zustand ragt. Ist das Mitnehmerorgan durch eine Mitnehmerscheibe gebildet, so weist die Mitnehmerscheibe bevorzugt in ihrem Zentrum eine Aufnahmeöffnung für die Welle auf. Die Welle kann zum Sichern des Mitnehmerorgans an ihrem achsseitigen Ende einen Wellenkopf aufweisen, dessen Durchmesser größer als ein Durchmesser der Aufnahmeöffnung des Mitnehmerorgans ist. Die sichere, drehsteife Verbindung zwischen der ersten Welle und dem Abtriebselement bzw. der Mitnehmerscheibe ist insbesondere dann von großer Bedeutung, wenn das Bewegungssensorsystem zwei Drehbewegungssensoren aufweist, da beide Drehbewegungssensoren die Drehung der Achse des Schienenfahrzeugs über das Abtriebselement von der ersten Welle abgreifen.

Um die Verbindung zwischen dem Abriebselement und der ersten Welle weiter zu verbessern, kann das Abtriebselement eine Aufnahmeöffnung für die erste Welle mit wenigstens einer Ausbuchtung für wenigstens ein Formschlusselement aufweisen. Insbesondere wenn das Abtriebselement bzw. ein das Abtriebselement bildendes Mitnehmerorgan mit dem achsseitigen Ende der ersten Welle verpresst ist, kann ein in der Ausbuchtung befindliches Formschlusselement der ersten Welle dafür sorgen, dass die Drehbewegung des Abtriebselements auch auf die Welle übertragen wird, wenn die Pressverbindung zwischen dem Abtriebselement und der ersten Welle gelöst oder gelockert sein sollte. Ist das Abtriebselement durch eine Mitnehmerscheibe gebildet, so erstreckt sich die wenigstens eine Ausbuchtung bevorzugt radial von der Aufnahmeöffnung für die erste Welle in die Mitnehmerscheibe hinein. Bevorzugt weist das Abtriebselement zwei sich gegenüber liegende Ausbuchtungen auf, welche zusammen eine längliche Aufnahme für ein längliches Formschlusselement bilden können.

Das Formschlusselement kann insbesondere stiftförmig sein. Das Formschlusselement ragt bevorzugt am achsseitigen Wellenende durch die erste Welle. Alternativ dazu kann es auch monolithisch mit der ersten Welle gebildet sein oder außen an dieser angebracht sein. Damit das Formschlusselement durch die erste Welle ragen kann, kann die erste Welle eine durchgängige Öffnung für das Formschlusselement quer zur Wellenachse aufweisen. Bevorzugt erstreckt sich die durchgängige Öffnung für das Formschlusselement durch die Achsmitte der ersten Welle.

Die Ausbuchtung für das wenigstens eine Formschlusselement im Abtriebselement erstreckt sich bevorzugt parallel zur Achsrichtung der Welle durchgängig durch das Abtriebselement hindurch. Im Falle einer Mitnehmerscheibe erstreckt sich die wenigstens eine Ausbuchtung also axial durch die Mitnehmerscheibe durch und radial in diese hinein.

Bevorzugt grenzt die durchgängige Öffnung für das Formschlusselement in der ersten Welle an den Kopf am achsseitigen Wellenende an. Die durchgängige Öffnung kann sich auch zumindest abschnittsweise durch den Kopf hindurch erstrecken. Es ist anzumerken, dass die Öffnung für das Formschlusselement nicht zwangsläufig eine durchgängige Öffnung sein muss. Insbesondere kann die erste Welle auch eine oder mehrere Öffnungen aufweisen, welche sich radial in das Wellenende erstrecken, um jeweils ein Formschlusselement aufzunehmen.

Zur Montage einer bevorzugten Ausführungsform mit einer durchgängigen Öffnung für das Formschlusselement im Wellenende wird zunächst ein längliches Formschlusselement in die durchgängige Öffnung eingesetzt und dann das Abtriebselement, welches bevorzugt durch eine Mitnehmerscheibe gebildet ist, auf die Welle gepresst, bis das Abtriebselement am Kopf der Welle anliegt und dabei das Formschlusselement in der wenigstens einen Ausbuchtung aufgenommen ist.

Das Abtriebselement, insbesondere eine Mitnehmerscheibe kann zur besonders sicheren Befestigung alternativ oder zusätzlich zu der zuvor beschriebenen Verbindung mit dem Formschlusselement zwischen dem Kopf der Welle und einem Kugellagerinnenring des ersten Drehbewegungssensors angeordnet sein. Dabei kann durch eine geeignete Befestigungsmaßnahme im ersten Drehbewegungssensor ein Zug auf die Welle ausgeübt werden, so dass die Mitnehmerscheibe zwischen dem Kopf der Welle und dem genannten Kugellagerinnenring eingepresst ist. Durch das Kugellager kann die Mitnehmerscheibe dabei um die Wellenachse drehbar sein.

Gemäß einer weiteren vorteilhaften Ausgestaltung kann das Abtriebselement wenigstens einen quer zur Wellenachse verlaufenden Aufnahmeschlitz zur Aufnahme eines Antriebselements der Achse des Schienenfahrzeugs aufweisen, wobei der wenigstens eine Aufnahmeschlitz zumindest an einer Seite von einer elastisch auslenkbaren Zunge begrenzt ist. Dabei kann der Aufnahmeschlitz so gewählt sein, dass sein Aufnahmedurchmesser höchstens dem Durchmesser des Antriebselements entspricht. Bevorzugt weist der Aufnahmeschlitz ohne ein in ihm aufgenommenes Antriebselement einen Aufnahmedurchmesser auf, welcher geringer als ein Durchmesser des Antriebselements ist. Beim Einsetzen des Antriebselements in den Aufnahmeschlitz wird dann die wenigstens eine elastisch auslenkbare Zunge elastisch vom Aufnahmeschlitz weg ausgelenkt und übt einen Druck auf das Antriebselement aus. Dadurch kann das Antriebselement spielfrei im Aufnahmeschlitz aufgenommen sein.

Um ein besonders einfach aufgebautes und kompaktes Bewegungssensorsystem zu erhalten, kann die erste Welle mit wenigstens einer weiteren Maßverkörperung des zweiten Drehbewegungssensors versehen sein. Die erste Welle überträgt dann das Drehmoment bzw. die Drehbewegung der Achse des Schienenfahrzeugs durch diese Maßnahme direkt auf wenigstens eine Maßverkörperung des zweiten Drehbewegungssensors.

Die erste Welle kann ein erstes Kupplungsteil zur drehsteifen Verbindung mit einem zweiten Kupplungsteil einer Welle des zweiten Drehbewegungssensors aufweisen. Dadurch kann das Bewegungssensorsystem modular aufgebaut sein. Dies kann von Vorteil sein, um die erste Welle des ersten Drehbewegungssensors und die Welle des zweiten Drehbewegungssensors getrennt voneinander herzustellen. Ein weiterer Vorteil kann der sein, dass ein Bewegungssensorsystem zunächst nur mit einem ersten Drehbewegungssensor an einer Achse des Schienenfahrzeugs montiert wird, solange nur die von diesem ersten Drehbewegungssensor erfassten Parameter aufgenommen werden sollen. Sollen zu einem späteren Zeitpunkt weitere Parameter erfasst werden, so kann über die Kupplung an der ersten Welle des ersten Drehbewegungssensors eine Welle des zweiten Drehbewegungssensors angebracht werden, so dass das Bewegungssensorsystem zwei Drehbewegungssensoren nutzen kann.

Die Kupplung zwischen dem ersten Kupplungsteil und dem zweiten Kupplungsteil ist bevorzugt formschlüssig. Insbesondere kann das erste Kupplungsteil mit dem zweiten Kupplungsteil in einem gekuppelten Zustand ineinander greifen. Alternativ dazu sind jedoch auch andere Kupplungsvarianten möglich. Beispielsweise kann eine Kupplung zwischen dem ersten Kupplungsteil und dem zweiten Kupplungsteil auch reibschlüssig oder magnetisch erfolgen.

Um die Montage zu vereinfachen, kann das erste Kupplungsteil mit dem zweiten Kupplungsteil entlang der Achsrichtung der ersten Welle zusammenschieb- oder zusammensteckbar sein.

Der erste Drehbewegungssensor kann durch einen Inkrementaldrehgeber gebildet sein. Ein Inkrementaldrehgeber kann dazu genutzt werden, die Rotationsgeschwindigkeit der Achse des Schienenfahrzeugs mit hoher Genauigkeit zu bestimmen.

Der Inkrementaldrehgeber kann zur Ausgabe eines Rolliersignals ausgestaltet sein. Rolliersignale können Aussagen über ein Rollieren der Achse liefern, welches es zu vermeiden gilt. Ein Inkrementaldrehgeber, welcher ein Rolliersignal ausgeben kann, kann wesentlich für einen sicheren Betrieb eines Schienenfahrzeugs sein.

Um den ersten Drehbewegungssensor als Inkrementaldrehgeber zu verwenden, kann die Maßverkörperung des ersten Drehbewegungssensors durch eine Inkrementscheibe gebildet sein. Die Inkrementscheibe kann insbesondere drehfest auf der ersten Welle angeordnet sein. Die Inkrementscheibe kann auf die erste Welle gepresst sein und/oder durch eine Verstiftung formschlüssig mit der ersten Welle verbunden sein.

Der zweite Drehbewegungssensor kann durch eine Vorrichtung zur Erfassung einer Drehung der Achse des Schienenfahrzeugs in einem stromlosen Zustand des Schienenfahrzeugs gebildet sein. Insbesondere kann der zweite Drehbewegungssensor ein Cold-Movement-Detektor (CMD) sein. Mit diesem ist es möglich, eine Drehung der Achse des Schienenfahrzeugs festzustellen, auch wenn sich das Schienenfahrzeug in einem abgerüsteten und damit stromlosen Zustand befindet.

Ein Bewegungssensorsystem, bei dem der erste Drehbewegungssensor ein Inkrementaldrehgeber, insbesondere ein solcher mit integrierter Rolliererkennung, und der zweite Drehbewegungssensor ein Cold-Movement-Detektor ist, ist besonders vorteilhaft, da mit einem solchen Bewegungssensorsystem wichtige sicherheitsrelevante Parameter erfasst werden können. Der erste Drehbewegungssensor kann beispielsweise während des Betriebs des Schienenfahrzeugs die Geschwindigkeit der Achse und ein eventuell auftretendes Rollieren derselben erfassen und der zweite Drehbewegungssensor kann dazu dienen, eine Bewegung der Achse in einem stromlosen Zustand des Schienenfahrzeugs zu erkennen. Da die beiden Drehbewegungssensoren ein Bewegungssensorsystem bilden und an einem Achsende des Schienenfahrzeugs angeordnet sein können, ist ein kompaktes Bewegungssensorsystem gegeben, durch das es möglich ist, die zuvor genannten Parameter an einem Achsende zu erzeugen.

Um sicherzustellen, dass eine Bewegung des Schienenfahrzeugs auch im abgerüsteten Zustand desselben erfasst wird, kann der zweite Drehbewegungssensor dazu ausgestaltet sein, eine Bewegung der Achse des Schienenfahrzeugs zu erfassen, selbst wenn der zweite Drehbewegungssensor selbst stromlos ist. Dies kann beispielsweise dadurch erreicht werden, dass die Maßverkörperung des zweiten Drehbewegungssensors durch eine Nockenscheibe gebildet ist und der zweite Drehbewegungssensor bistabile Aktoren aufweist, welche durch die Nockenscheibe bei einer Drehung der Welle von einem Zustand in einen zweiten Zustand versetzt werden können. Dies kann auch im stromlosen Zustand des Drehbewegungssensors selbst geschehen, wobei der Zustand der Aktoren von einer Auswerteeinheit ausgelesen werden kann, sobald wenigstens der zweite Drehbewegungssensor wieder mit einer Spannungsquelle verbunden ist.

Um ein Bewegungssensorsystem mit zwei Drehbewegungssensoren besonders kompakt zu gestalten und um eine sichere Übertragung des Drehmoments bis auf wenigstens eine Maßverkörperung des zweiten Drehbewegungssensors zu erreichen, kann wenigstens eine Maßverkörperung des zweiten Drehbewegungssensors auf der ersten Welle angeordnet sein. Dadurch kann die erste Welle eine gemeinsame Welle für den ersten und den zweiten Drehbewegungssensor darstellen. Alternativ dazu ist es auch möglich, dass wenigstens eine Maßverkörperung des zweiten Drehbewegungssensors auf der ersten Welle angeordnet ist, diese Welle jedoch trotzdem über eine Kupplung mit einer zweiten Welle verbunden ist, auf der wenigstens eine weitere Maßverkörperung des zweiten Drehbewegungssensors angeordnet ist.

In einem montierten Zustand kann je ein Drehbewegungssensor wenigstens abschnittsweise in einem zugehörigen Gehäuseteil angeordnet sein. Dadurch können die einzelnen Drehbewegungssensoren entsprechend ihrer Abmessungen und technischen Voraussetzungen gegen äußere Einflüsse geschützt sein. Dabei ist es besonders vorteilhaft, wenn die Gehäuseteile zu einem gemeinsamen Systemgehäuse des Bewegungssensorsystems zusammensetzbar sind. Ebenfalls von Vorteil ist es, wenn die Gehäuseteile parallel zur Achsrichtung der ersten Welle des ersten Drehbewegungssensors zusammensetzbar sind. Dadurch kann es ermöglicht sein, ein Gehäuseteil des zweiten Drehbewegungssensors auf das Gehäuseteil des ersten Drehbewegungssensors zu montieren und dabei gleichzeitig eine zweite Welle des zweiten Drehbewegungssensors mit der ersten Welle des ersten Drehbewegungssensors zu verbinden, oder die erste Welle des Drehbewegungssensors mit einer Maßverkörperung des zweiten Drehbewegungssensors in das Gehäuseteil des zweiten Drehbewegungssensors einzuführen.

Gemäß einer weiteren vorteilhaften Ausgestaltung kann wenigstens ein Drehbewegungssensor mit seinem zugehörigen Gehäuseteil ein austauschbares Sensormodul bilden. D.h. jedes Sensormodul weist einen Drehbewegungssensor und das dazugehörige Gehäuseteil auf. Dadurch kann ein Bewegungssensorsystem modular aufgebaut sein und es können einzelne Teile bzw. einzelne Sensormodule beispielsweise in einem Schadenfall einfach ausgetauscht werden. Bevorzugt weisen die austauschbaren Sensormodule jeweils eigene Wellen mit Kupplungsteilen auf, so dass durch eine Verbindung zweier Sensormodule auch die Wellen der Drehbewegungssensoren drehfest miteinander verbunden werden. Dabei können die Wellen jeweils in ihren Sensormodulen bzw. in ihren Gehäuseteilen gelagert sein, d.h. jede Welle verfügt über eine Eigenlagerung. Alternativ dazu kann auch nur die erste Welle eine Eigenlagerung aufweisen. Die Welle des zweiten Drehbewegungssensors kann ohne eigene Lagerung ausgestaltet sein und als Verlängerung der ersten Welle deren Lagerung nutzen.

Um die Sicherheit für ein Schienenfahrzeug zu erhöhen und um zu gewährleisten, dass beim Ausfall eines Drehbewegungssensors die Funktion des anderen Drehbewegungssensors nicht beeinträchtigt ist, kann jeder Drehbewegungssensor eine eigene Datenleitung zur Übertragung von Sensorsignalen an wenigstens eine Kontrolleinrichtung aufweisen. Dabei kann die Kontrolleinrichtung entweder ein Bestandteil des Bewegungssensorsystems sein, oder ein externes System darstellen.

Um eine Modularität der Drehbewegungssensoren des Bewegungssensorsystems zu verbessern, kann jedes Gehäuseteil wenigstens einen Anschluss für eine Datenleitung des zugehörigen Drehbewegungssensors aufweisen.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend für einen bestimmten Anwendungsfall durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine perspektivische Darstellung einer ersten Ausführungsform eines erfindungsgemäßen Bewegungssensorsystems bestehend aus zwei Drehbewegungssensoren in einem zusammengesetzten Zustand;
- Fig. 2: das Bewegungssensorsystem der Fig. 1 mit Blick auf ein achsseitiges Ende des Bewegungssensorsystems;
- Fig. 3: einen Blick in das Innere des ersten Drehbewegungssensors der ersten Ausführungsform;
- Fig. 4: einen Blick in das Innere des zweiten Drehbewegungssensors der ersten Ausführungsform;
- Fig. 5: einen Blick in das Innere des ersten Drehbewegungssensors einer zweiten Ausführungsform des erfindungsgemäßen Bewegungssensorsystems;
- Fig. 6: einen Blick in das Innere des zweiten Drehbewegungssensors der zweiten Ausführungsform;
- Fig. 7: eine perspektivisch Darstellung eines Sensormoduls einer dritten Ausführungsform mit einem ersten Drehbewegungssensor;
- Fig. 8: das Sensormodul aus Fig. 7 in einem geöffneten Zustand;
- Fig. 9: das Sensormodul der dritten Ausführungsform mit einer aufgesetzten zweiten Welle;
- Fig. 10: ein Bewegungssensorsystem bestehend aus einem Sensormodul der dritten Ausführungsform und einem zweiten Sensormodul in einer Schnittdarstellung;
- Fig. 11: eine Schnittdarstellung eines erfindungsgemäßen ersten Drehbewegungssensors mit einer erfindungsgemäßen Welle;
- Fig. 12: das achsseitige Ende einer erfindungsgemäßen Welle;
- Fig. 13: eine erste Ausführungsform eines erfindungsgemäßen Abtriebselements;
- Fig. 14: eine zweite Ausführungsform eines erfindungsgemäßen Abtriebselements.

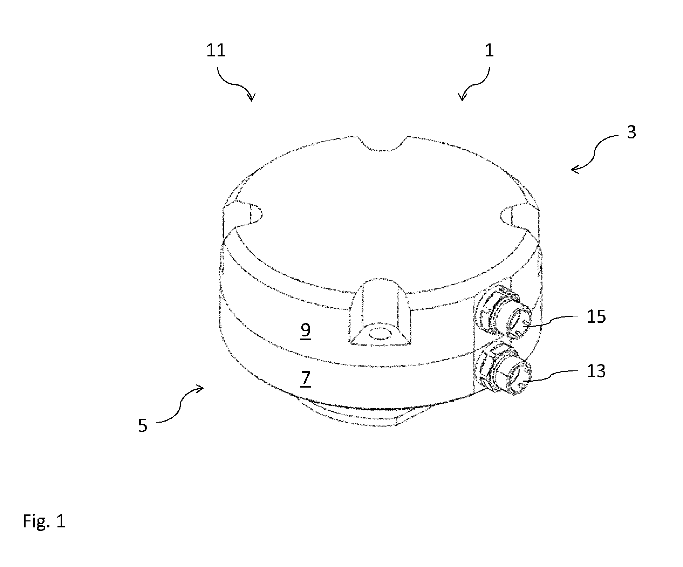

Fig. 1 zeigt ein erfindungsgemäßes Bewegungssensorsystem 1 in einer perspektivischen Darstellung. Die erste Ausführungsform des Bewegungssensorsystems 1 besitzt einen ersten Drehbewegungssensor 3 und einen zweiten Drehbewegungssensor 5. Der erste Drehbewegungssensor 3 kann ein zugehöriges Gehäuseteil 7 und der zweite Drehbewegungssensor 5 kann ein zugehöriges Gehäuseteil 9 aufweisen. In einem zusammengesetzten Zustand können die Gehäuseteile 7 und 9 ein Systemgehäuse 11 bilden. Dabei kann insbesondere das Gehäuseteil 9 des zweiten Drehbewegungssensors 5 deckelartig ausgestaltet sein.

Das Gehäuseteil 7 besitzt einen Anschluss 13 für eine Datenleitung (nicht gezeigt) des ersten Drehbewegungssensors 3 und das Gehäusteteil 9 besitzt einen Anschluss 15 für eine Datenleitung des zweiten Drehbewegungssensors 5. Die separaten Anschlüsse 13 und 15 erlauben es, die Daten der Drehbewegungssensoren 3 und 5 getrennt aus dem Systemgehäuse 11 zu leiten.

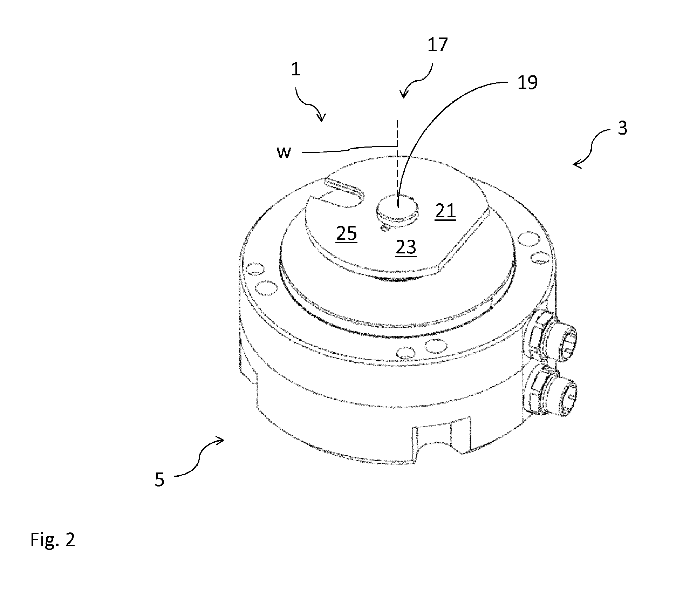

Fig. 2 zeigt das Bewegungssensorsystem 1 aus Fig. 1 mit Blick auf ein achsseitiges Ende 17 einer ersten Welle 19 des ersten Drehbewegungssensors 3. Die erste Welle 19 ragt aus dem Gehäuseteil 7 des ersten Drehbewegungssensors 3 heraus. Die erste Welle 19 ist um die Wellenachse W drehbar. Drehfest mit der ersten Welle 19 verbunden ist das Abtriebselement 21. Das Abtriebselement 21 dient zum Abgreifen der Drehbewegung der Achse eines Schienenfahrzeugs. Insbesondere kann die Achse des Schienenfahrzeugs (nicht gezeigt) ein Antriebselement aufweisen, welches die Bewegung der Achse an das Abtriebselement 21 übertragen kann.

Das Abtriebselement 21 ist bevorzugt durch ein Mitnehmerorgan 23 gebildet. Alternativ dazu kann das Abtriebselement 21 beispielsweise auch ein Teil eines Getriebes sein, ein Aufnehmer für einen Riemen oder ein Zahnrad. Prinzipiell kann das Abtriebselement 21 durch jedes Element gebildet sein, welches zum Antrieb durch die Achse des Schienenfahrzeugs bzw. ein an der Achse des Schienenfahrzeugs angeordnetes Antriebselement geeignet ist.

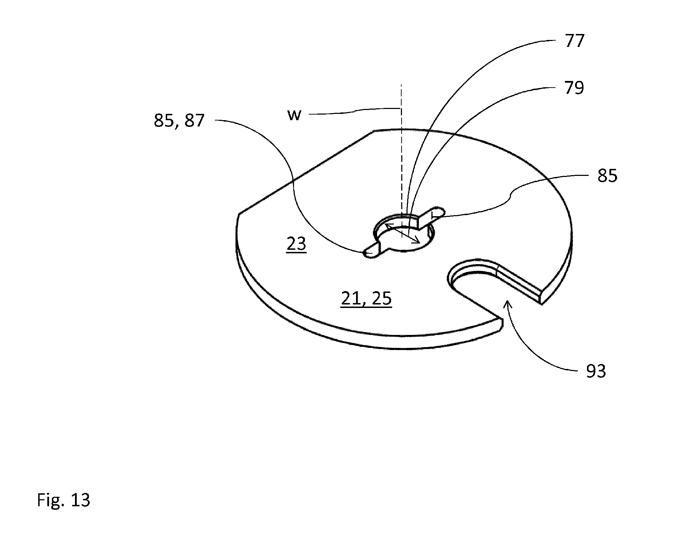

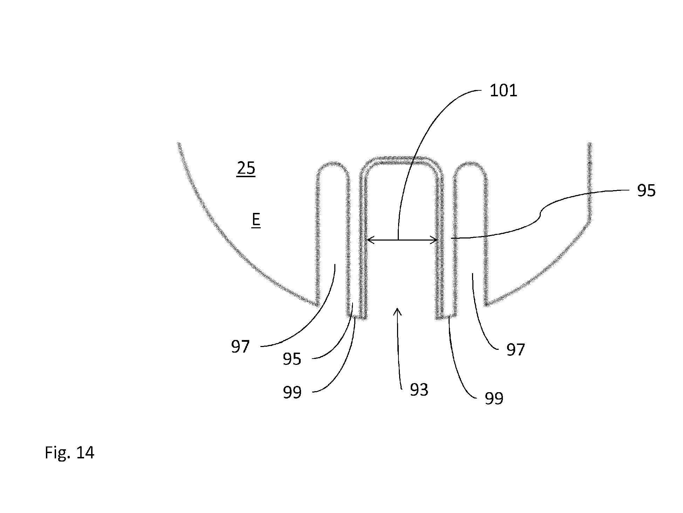

Das Mitnehmerorgan 23 ist bevorzugt als Mitnehmerscheibe 25 gebildet. Dadurch kann das Abtriebselement 21 bzw. das Mitnehmerorgan 23 gleichzeitig kompakt und formstabil sein. Auf die Ausgestaltung erfindungsgemäßer Mitnehmerorgane 23 ist mit Bezug auf die Figuren 13 und 14 näher eingegangen.

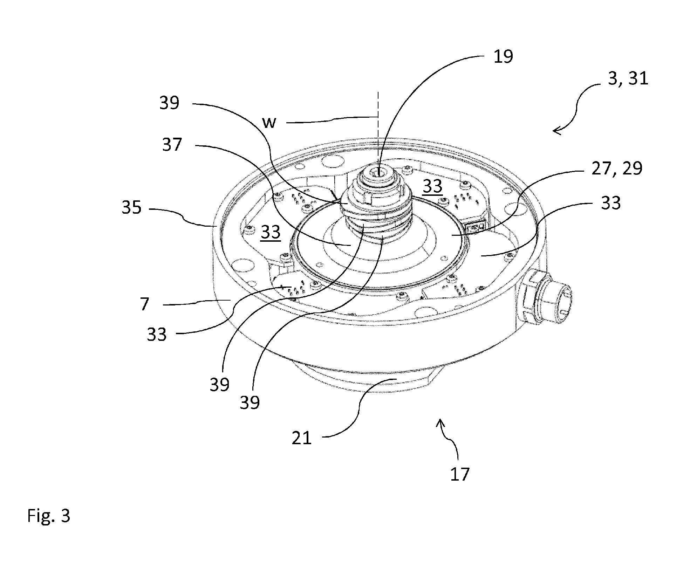

Fig. 3 zeigt den ersten Drehbewegungssensor 3 der mit Bezug auf die Figuren 1 und 2 beschriebenen ersten Ausführungsform des erfindungsgemäßen Bewegungssensorsystems 1 ohne den deckelartigen Gehäuseteil 9 des zweiten Drehbewegungssensors 5. Die erste Welle 19 ragt durch den ersten Drehbewegungssensor 3 und durch dessen zugehörigen Gehäuseteil 7 hindurch. Die erste Welle 19 ist drehbar im ersten Drehbewegungssensor 3 gelagert. Dazu kann der erste Drehbewegungssensor 3 wenigstens ein Lager, insbesondere ein Kugellager aufweisen.

An der ersten Welle 19 ist drehbar eine Maßverkörperung 27 des ersten Drehbewegungssensors 3 angeordnet. Die Maßverkörperung 27 erstreckt sich radial um die Wellenachse W der ersten Welle 19. Bevorzugt ist die Maßverkörperung 27 des ersten Drehbewegungssensors 3 durch eine Inkrementscheibe 29 gebildet. Dies ist insbesondere dann sinnvoll, wenn der erste Drehbewegungssensor 3 durch einen Inkrementaldrehgeber 31 gebildet ist. Die Ausgestaltung des ersten Drehbewegungssensors 3 als Inkrementaldrehgeber 31 ist eine bevorzugte Ausführungsform der Erfindung. Der erste Drehbewegungssensor 3 kann jedoch auch durch einen anderen Drehbewegungssensor gebildet sein. Dann muss auch die Maßverkörperung 27 des ersten Drehbewegungssensors 3 nicht zwingend durch eine Inkrementscheibe 29 gebildet sein. In dem Gehäuseteil 7 können Sensorkomponenten 33 untergebracht sein, welche zur Abfrage und Auswertung der Maßverkörperung 27 ausgestaltet sind. Beispielsweise können die Sensorkomponenten 33 optische Erfassungssysteme zur Auswertung der Inkremente der Inkrementscheibe 29 sein.

Gemäß der ersten Ausführungsform kann die erste Welle 19 so gestaltet sein, dass sie über einen oberen Rand 35 des Gehäuseteils 7 hinaus ragt. Dabei ist der obere Rand 35 in Richtung der Wellenachse W dem achsseitigen Ende 17 gegenüberliegend angeordnet. Die erste Welle 19 erstreckt sich also an ihrem dem achsseitigen Ende 17 gegenüberliegenden Ende über die Maßverkörperung 27 des ersten Drehbewegungssensors 3 hinaus. In diesem oberen Abschnitt 37 kann die erste Welle 19 wenigstens eine weitere Maßverkörperung 39 des zweiten Drehbewegungssensors 5 aufweisen.

In einer bevorzugten Ausführungsform weist der obere Abschnitt 37 der ersten Welle 19 drei weitere Maßverkörperungen 39 auf. Die weiteren Maßverkörperungen 39 sind drehfest mit der ersten Welle 19 verbunden. Die weiteren Maßverkörperungen 39 des zweiten Drehbewegungssensors 5 drehen sich also mit der Welle 19 des ersten Drehbewegungssensors 3 mit. Dadurch kann das Drehmoment der ersten Welle 19 direkt auf die Maßverkörperungen 39 des zweiten Drehbewegungssensors 5 übertragen werden.

Der zweite Drehbewegungssensor 5 ist gemäß einer bevorzugten Ausführungsform der Erfindung durch eine Vorrichtung 41 zur Erfassung einer Drehung in einem stromlosen Zustand des Schienenfahrzeugs gebildet. Insbesondere kann die Vorrichtung 41 ein sogenannter Cold Movement Detector (CMD) sein. Wenigstens eine weitere Maßverkörperung 39 des zweiten Drehbewegungssensors 5 kann durch eine Nockenscheibe 43 gebildet sein. Bevorzugt weist der zweite Drehbewegungssensor 5 drei als Nockenscheibe 43 gebildete weitere Maßverkörperungen 39 auf. Die Nockenscheiben 43 können mit der ersten Welle 19 verpresst und/oder verstiftet sein.

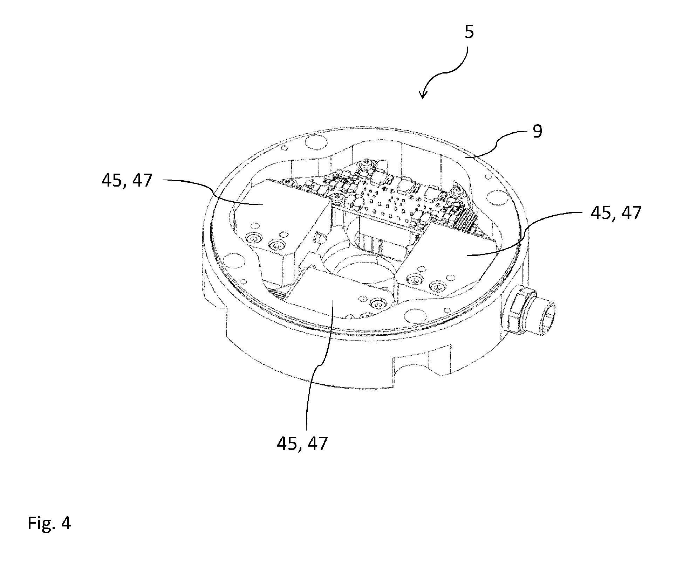

Fig. 4 zeigt eine Innenansicht des zugehörigen Gehäuseteils 9 des zweiten Drehbewegungssensors 5 der ersten Ausführungsform. Das zugehörige Gehäuseteil 9 kann so gestaltet sein, dass es formschlüssig in das zugehörige Gehäuseteil 7 des ersten Drehbewegungssensors 3 einsetzbar ist. In dem zugehörigen Gehäuseteil 9 können Abfrageelemente 45 des zweiten Drehbewegungssensors 5 angeordnet sein. Die Abfrageelemente 45 sind so ausgestaltet, dass diese die Maßverkörperungen 39 abfragen bzw. auswerten können. Ist der zweite Drehbewegungssensor 5 wie beschrieben eine Vorrichtung 41, bzw. ein CMD, so sind die Abfrageelemente 45 bevorzugt durch bistabile Aktoren 47 gebildet, welche durch die Nockenscheiben 43 ausgelenkt werden können, so dass eine Drehung der ersten Welle 19 erfasst werden kann.

Bevorzugt ist der zweite Drehbewegungssensor 5 so gestaltet, dass er auch eine Drehbewegung der ersten Welle 19 detektieren kann, wenn er mit keiner Spannungsquelle verbunden ist. Dies kann durch ein Zusammenspiel der Nockenscheiben 43 mit den bistabilen Aktoren 47 erfolgen. Jeder Nockenscheibe 43 ist ein bistabiler Aktor 47 zugeordnet. Bei einer Drehung der ersten Welle 19, wodurch auch die Nockenscheiben 43 gedreht werden, kann wenigstens eine der Nockenscheiben 43 ihren zugehörigen bistabilen Aktor 47 aus einem ersten Zustand in einen zweiten Zustand bewegen. Dieser Zustand kann später, sobald der zweite Drehbewegungssensor 5 und/oder das Schienenfahrzeug wieder spannungsversorgt sind, ausgelesen werden und mit einem vor dem Abschalten gespeicherten Wert verglichen werden.

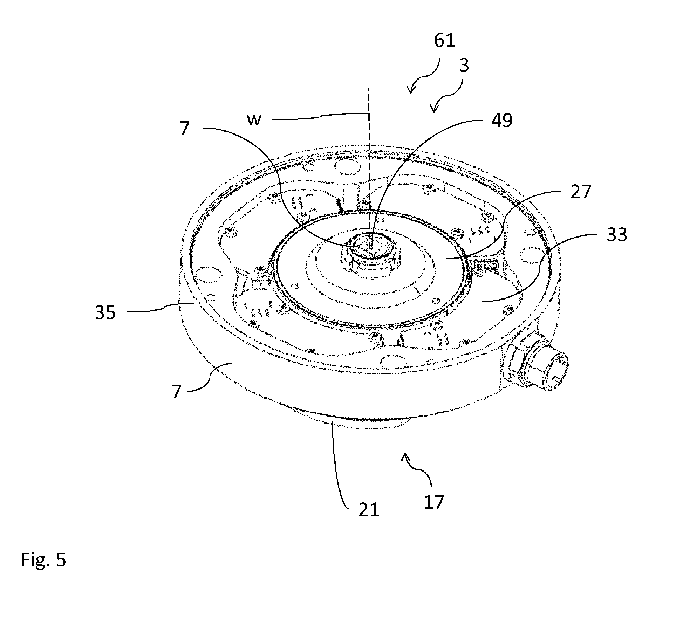

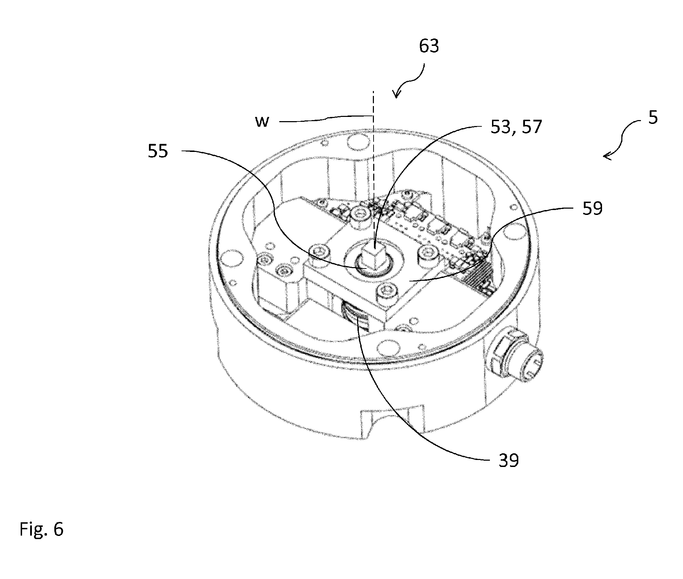

Die Fig. 5 und 6 zeigen eine zweite Ausführungsform eines erfindungsgemäßen Bewegungssensorsystems 1. Im Folgenden ist insbesondere auf die Unterschiede zur mit Bezug auf die Fig. 1 bis 4 beschriebenen ersten Ausführungsform eingegangen.

Wie bei der ersten Ausführungsform weist das Gehäuseteil 7 des ersten Drehbewegungssensors 3 die Sensorkomponenten 33 des ersten Drehbewegungssensors 3 und die erste Welle 19 auf. Die erste Welle 19 der zweiten Ausführungsform weist jedoch keine weitere Maßverkörperung 39 des zweiten Drehbewegungssensors 5 auf. Stattdessen weist die erste Welle 19 ein erstes Kupplungsteil 49 auf, welches an ihrem dem achsseitigen Ende 17 gegenüberliegenden Ende angeordnet ist. Um das erfindungsgemäße Bewegungssensorsystem 1 besonders kompakt zu gestalten bzw. um bereits den ersten Drehbewegungssensor 3 besonders kompakt zu gestalten, erstreckt sich die Maßverkörperung 27 des ersten Drehbewegungssensors 3 um das erste Kupplungsteil 49 herum. In der gezeigten Ausführungsform ist das erste Kupplungsteil 49 als sich parallel zur Wellenachse W in die erste Welle 19 hinein erstreckende vierkantige Aufnahme 51 zur Aufnahme eines komplementär gebildeten Gegenstücks 53 des zweiten Drehbewegungssensors 5 gebildet. Das Gegenstück 53 ist Teil einer Welle 55 des zweiten Drehbewegungssensors 5 oder mit einer Welle 55 des zweiten Drehbewegungssensors 5 verbunden. Das Gegenstück 53 stellt dabei das zweite Kupplungsteil 57 des zweiten Drehbewegungssensors 5 dar.

Die Erfindung ist nicht auf die dargestellte Vierkantform der Kupplungsteile 49 und 57 beschränkt. Es sind auch andere zur drehsteifen Verbindung der ersten Welle 19 mit der zweiten Welle 55 geeignete Ausgestaltungen denkbar.

Die Welle 55 des zweiten Drehbewegungssensors 5 kann eine eigene Lagerung 59 aufweisen. Die Lagerung 59 kann aus wenigstens einem Kugellager bestehen. Bevorzugt weist die Lagerung 59 zwei entlang der Wellenachse W voneinander beabstandete Kugellager auf, wobei wenigstens eine weitere Maßverkörperung 39 zwischen den beiden Kugellagern angeordnet ist. Im Gegensatz zur ersten Ausführungsform, bei der die Maßverkörperungen 27 und 39 gemeinsam auf der ersten Welle 19 angeordnet sind und eine Lagerung der ersten Welle 19 nur im Gehäuseteil 7 des ersten Drehbewegungssensors 3 angeordnet ist, weisen bei der zweiten Ausführungsform jeder Drehbewegungssensor 3 und 5 eine eigene Lagerung für jeweils eine eigene Welle 19 und 55 auf.

Der Vorteil der zweiten Ausführungsform gegenüber der ersten Ausführungsform ist der, dass jeder Drehbewegungssensor 3 und 5 vollständig in seinem zugehörigen Gehäuseteil 7 und 9 angeordnet ist. Dadurch kann ein schneller Austausch der einzelnen Drehbewegungssensoren 3 und 5 erfolgen, wenn dieses notwendig sein sollte. Das Bewegungssensorsystem 1 der zweiten Ausführungsform ist dadurch modular aufgebaut und weist ein erstes Sensormodul 61 mit dem ersten Drehbewegungssensor 3 und dem dazugehörigen Gehäuseteil 7 und ein zweites Sensormodul 63 mit dem zweiten Drehbewegungssensor 5 und dem zugehörigen Gehäuseteil 9 auf. Zur Verbindung der beiden Sensormodule 61 und 63 können die beiden Sensormodule parallel zur Wellenachse W zusammengesetzt werden, so dass das Gegenstück 53 in die Aufnahme 51 eindringt und so dass die beiden Gehäuseteile 7 und 9 zusammen ein Systemgehäuse 11 formen.

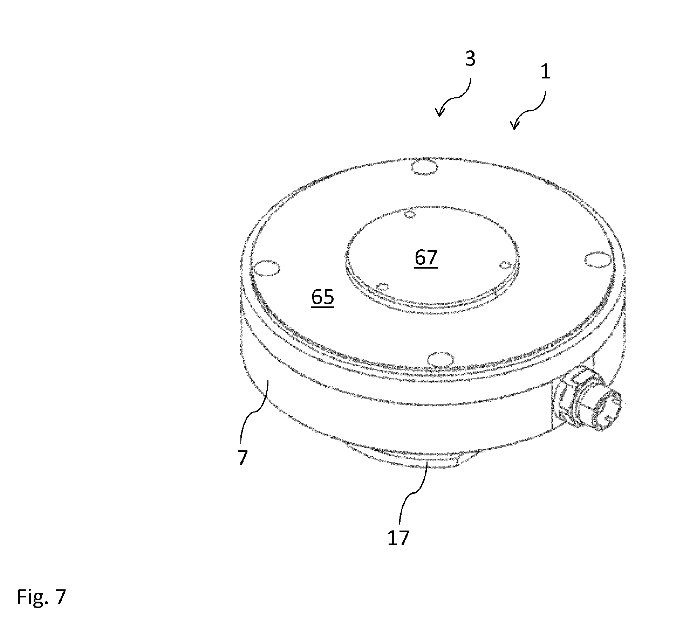

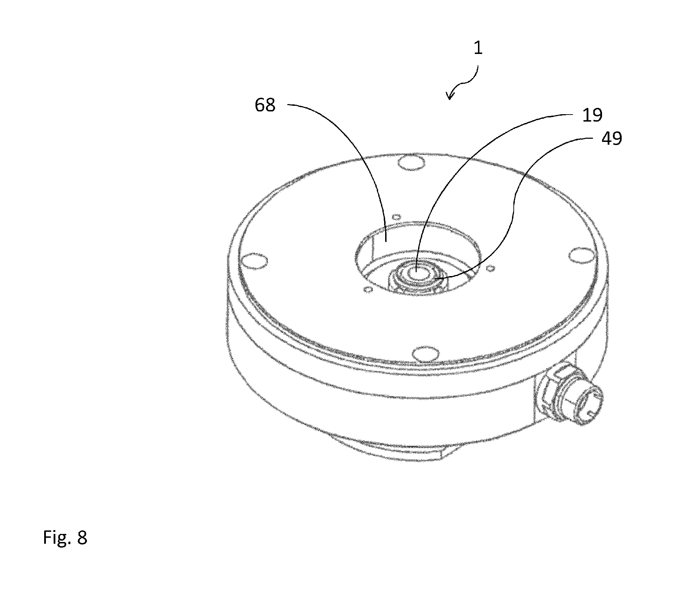

Die Fig. 7 und 8 zeigen eine dritte Ausführungsform eines erfindungsgemäßen Bewegungssensorsystems 1. Das Bewegungssensorsystem 1 kann einen ersten Drehbewegungssensor 3 entsprechend der zweiten Ausführungsform aufweisen. Das Gehäuseteil 7 ist an seinem dem achsseitigen Ende 17 der ersten Welle 19 gegenüberliegenden Ende mit einem Verschluss 65 verschlossen. Dies kann von Vorteil sein, um das Bewegungssensorsystem 1 ausschließlich mit dem ersten Drehbewegungssensor 3 zu betreiben. Da der erste Drehbewegungssensor 3 ein erstes Kupplungsteil 49 aufweist, kann er nachträglich mit einem zweiten Drehbewegungssensor 5 verbunden werden. Dazu kann beispielsweise der Verschluss 65 entfernt und stattdessen ein zweiter Drehbewegungssensor 5 mit seinem zugehörigen Gehäuseteil 9 auf das Gehäuseteil 7 gesetzt werden, wobei die erste Welle 19 des ersten Drehbewegungssensors 3 mit der Welle 55 des zweiten Drehbewegungssensors 5 drehsteif verbunden wird.

Der Verschluss 65 kann einen zusätzlichen Deckel 67 aufweisen, welcher vom Verschluss 65 abnehmbar ist. Der Deckel 67 kann so ausgestaltet sein, dass er in einem montierten Zustand das erste Kupplungsteil 49 der ersten Welle 19 verdeckt. Zur Verbindung mit einem zweiten Drehbewegungssensor 5 kann es ausreichen, nur den Deckel 67 vom Verschluss 65 abzunehmen, so dass das erste Kupplungsteil 49 für das zweite Kupplungssteil 57 des zweiten Drehbewegungssensors 5 durch eine Öffnung 68 zugänglich ist. Das erste Kupplungsteil 49 kann dabei wie das Kupplungsteil 49 der mit Fig. 5 beschriebenen Ausführungsform ausgestaltet sein. Das zweite Kupplungsteil 57 des zweiten Drehbewegungssensors 5 (nicht gezeigt) kann entsprechend der mit Bezug auf die Fig. 6 beschriebenen Ausführungsform gebildet sein.

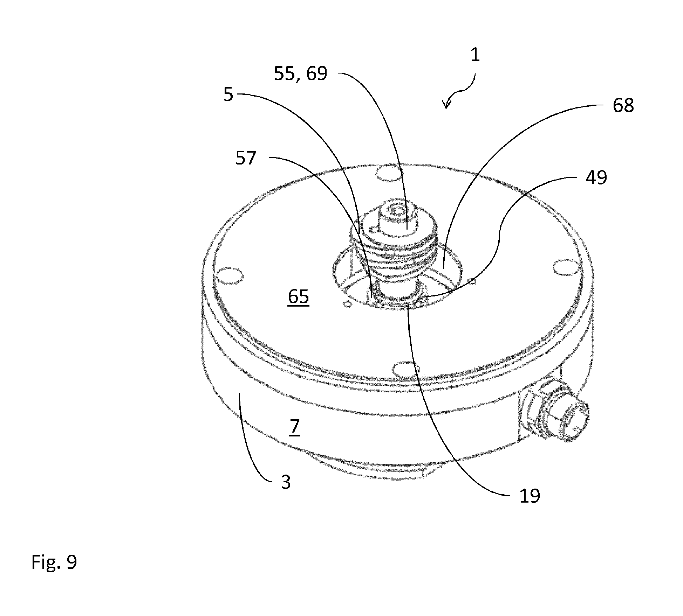

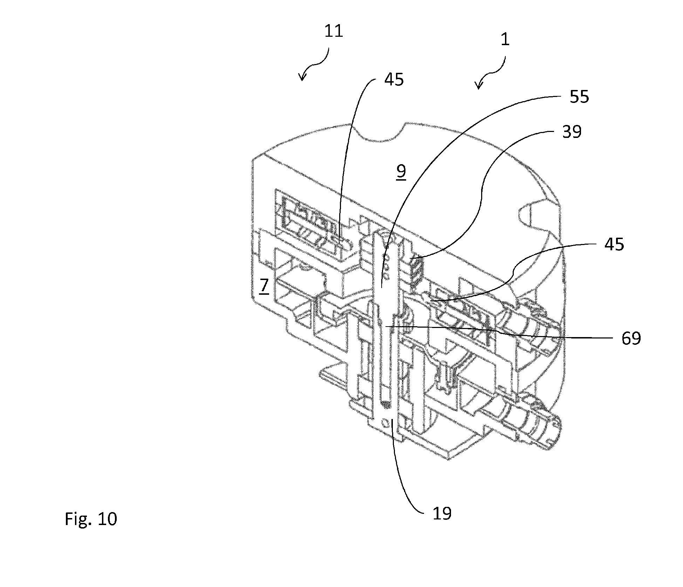

Die Fig. 9 und 10 zeigen eine vierte Ausführungsform eines erfindungsgemäßen Bewegungssensorsystems 1. Der erste Drehbewegungssensor 3 kann wie die mit Bezug auf die Fig. 7 und 8 beschriebenen dritte Ausführungsform ausgestaltet sein und einen Verschluss 65 aufweisen. Bevorzugt kann eine Öffnung 68 des Verschlusses 65 durch einen Deckel 67 (nicht gezeigt) verschließbar sein. Im Gegensatz zur zuvor beschriebenen dritten Ausführungsform, bei der der erste Drehbewegungssensor 3 mit einem zweiten Drehbewegungssensor 5 verbindbar ist, bei dem die Welle 55 eine eigene Lagerung 59 aufweist, kann gemäß der vierten Ausführungsform eine Welle 55 mit der ersten Welle 19 verbunden sein, ohne eine eigene Lagerung aufzuweisen. Dazu kann die Welle 55 ein zweites Kupplungsteil 57 aufweisen, welches drehfest mit einem ersten Kupplungsteil 49 der ersten Welle 19 verbindbar ausgestaltet ist. Die dadurch entstehende gemeinsame Welle 69 ist dann nur im ersten Drehbewegungssensor 3 gelagert.

Die zweite Welle 55 trägt wenigstens eine weitere Maßverkörperung 39 des zweiten Drehbewegungssensors 5. Wie bei der mit Bezug auf die Fig. 1 bis 4 beschriebenen ersten Ausführungsform weist das Gehäuseteil 9 des zweiten Drehbewegungssensors 5 die Abfrageelemente 45 auf, welche mit den weiteren Maßverkörperungen 39 zusammenwirken können. Wird das zugehörige Gehäuseteil 9 des zweiten Drehbewegungssensors 5 auf das Gehäuseteil 7 des ersten Drehbewegungssensors 3 aufgesetzt, so ragt die Welle 55 mit den Maßverkörperungen 39 in das Gehäuseteil 9, so dass die Maßverkörperungen 39 mit den Abfrageelementen 45 zusammenwirken können. Dadurch ist ein Bewegungssensorsystem mit zwei Drehbewegungssensoren gebildet und die Gehäuseteile 7 und 9 bilden ein gemeinsames Systemgehäuse 11. Zur Fixierung der zweiten Welle 55 mit der ersten Welle 19 kann es von Vorteil sein, die beiden Wellen miteinander zu verstiften, zu verschrauben oder anderweitig miteinander zu verbinden.

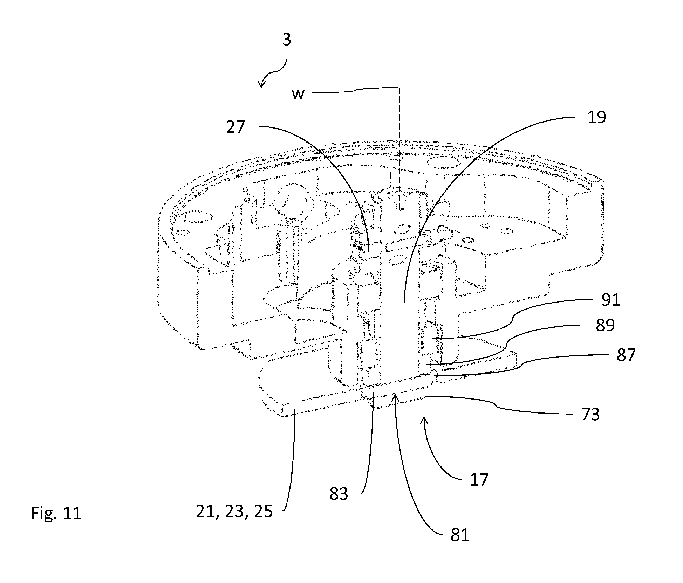

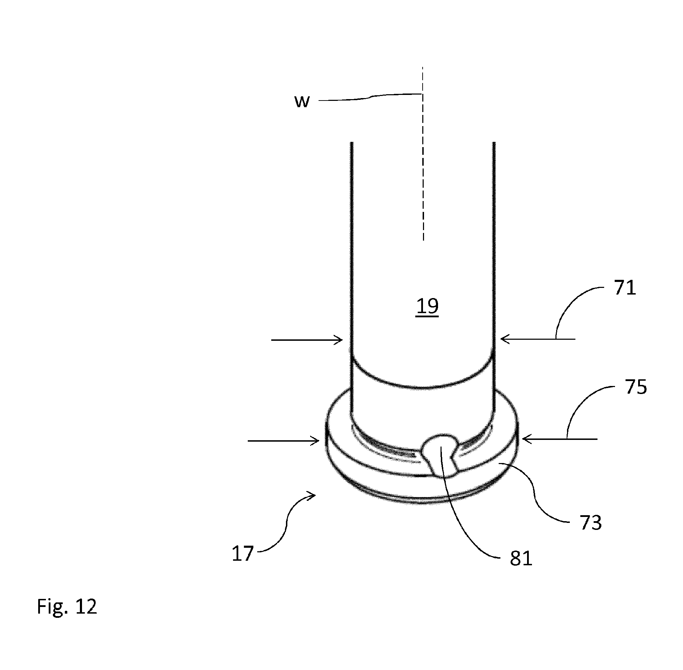

Im Folgenden ist die erfindungsgemäße erste Welle 19, deren Verbindung mit einem erfindungsgemäßen Abtriebselement 21 und ein solches Abtriebselement 21 mit Bezug auf die Fig. 11 bis 13 beschrieben.

Fig. 11 zeigt dabei lediglich beispielhaft einen Drehbewegungssensor, um die Position der erfindungsgemäßen ersten Welle 19an einem Drehbewegungssensor darzustellen. Die im Folgenden beschriebene Anordnung der ersten Welle 19 und deren achsseitiges Ende 17 ist mit allen vorher beschriebenen Ausführungsformen eines erfindungsgemäßen Bewegungssensorsystems verwendbar. Die erste Welle 19 weist ein achsseitigen Ende 17 auf und erstreckt von diesem entlang der Wellenachse W in den ersten Drehbewegungssensor 3. Im ersten Drehbewegungssensor 3 ist die erste Welle 19 mit wenigstens einer Maßverkörperung 27 des ersten Drehbewegungssensors 3 drehfest verbunden. Insbesondere kann die erste Welle 19 mit wenigstens einer Maßverkörperung 27 verpresst und/oder verstiftet sein.

Die Welle 19 weist einen Wellendurchmesser 71 auf. Bevorzugt erstreckt sich der Wellendurchmesser 71 über die gesamte Welle 19 mit Ausnahme ihres achsseitigen Endes 17. An dem achsseitigen Ende 17 weist die Welle 19 einen Wellenkopf 73 mit einem Durchmesser 75 auf, der größer ist als der Wellendurchmesser 71. Der Wellenkopf 73 kann dazu dienen, ein Abtriebselement 21 an der Welle 19 zu halten. Zumindest kann der Wellenkopf 73 dazu dienen, ein Abtriebselement 21 in Richtung des achsseitigen Endes 17 zu halten.

Bevorzugt ist das Abtriebselement 21 auf die erste Welle 19 gepresst. Zum Pressen kann das Abtriebselement 21 eine Aufnahmeöffnung 77 für die Welle aufweisen, deren Durchmesser 79 in etwa dem Wellendurchmesser 71 entspricht. Durch die Pressverbindung zwischen der ersten Welle 19 und dem Abtriebselement 21 kann eine reibschlüssige Verbindung zwischen diesen beiden Elementen hergestellt sein.

Um das Aufpressen des Abtriebselements auf die erste Welle 19 zu erleichtern, kann der Wellendurchmesser 71 zum Wellenkopf 73 hin zunehmen, so dass das Abtriebselement 21 zunächst leicht über Welle 19 gleiten kann und dann erst im Bereich des Wellenkopfes 73 eine Pressverbindung mit der Welle 19 eingeht. Durch die Pressverbindung zwischen erster Welle 19 und dem Abtriebselement 21 kann das Abtriebselement 21 spielfrei eine Drehbewegung auf die erste Welle 19 übertragen.

Die erste Welle 19 kann eine Öffnung 81 für ein Formschlusselement 83 aufweisen. Die Öffnung 81 verläuft bevorzugt durchgängig durch die Welle 19 und senkrecht zur Wellenachse W. Ebenfalls bevorzugt verläuft die Öffnung 81 so, dass sie die Wellenachse W schneidet, also mittig durch die erste Welle 19 durchgeht.

Die Öffnung 81 kann sich auch zumindest abschnittsweise durch den Wellenkopf 73 erstrecken. In die Öffnung 81 kann ein Formschlusselement 83 eingesetzt werden, welches einen Formschluss mit dem Abtriebselement 21 eingehen kann. Dadurch kann gewährleistet sein, dass im Falle eines Verlustes der Pressverbindung zwischen dem Abtriebselement 21 und der Welle 19 ein Durchdrehen des Abtriebselements 21 auf der Welle 19 verhindert wird. Das Abtriebselement 21 kann dann durch den Formschluss immer noch eine Drehbewegung auf die Welle 19 übertragen.

Zur Aufnahme des Formschlusselements 83 weist das Abtriebselement 21 bevorzugt wenigstens eine Ausbuchtung 85 auf, die sich von der Aufnahmeöffnung 77 weg erstreckt. Bevorzugt erstreckt sich die Ausbuchtung 85 radial von der Wellenachse W in das Abriebselement 21. Um eine hohe Sicherheit zu gewährleisten, weist das Abtriebselement 21 bevorzugt zwei sich gegenüberliegende Ausbuchtungen 85 auf. Durch zwei sich gegenüberliegende Ausbuchtungen 85 kann eine längliche Aufnahme 87 für das Formschlusselement 83 gebildet sein. In Fig. 11 ist eine erfindungsgemäße erste Welle 19 in einer Schnittdarstellung gezeigt, wobei die Schnittebene durch ein längliches Formschlusselement 83 in der Welle 19 und durch eine längliche Aufnahme 87 in einem als Mitnehmerscheibe 25 gebildeten Abtriebselement 21 gezeigt ist.

Zur einfachen und gleichzeitig sicheren Verbindung des Abtriebselements 21 mit der ersten Welle 19 kann zunächst das Formschlusselement 83 in die Öffnung 81 in der ersten Welle 19 eingesetzt und dann das Abtriebselement 21 auf die erste Welle 19 gepresst werden, bis das Abtriebselement 21 am Wellenkopf 73 anliegt. Dabei kann die wenigstens eine Ausbuchtung 85 so angeordnet sein, dass das Formschlusselement 83 in dieser angeordnet ist, wenn das Abtriebselement 21 an dem Wellenkopf 73 anliegt. Dieser Zustand ist in Fig. 11 dargestellt. Um die Sicherheit des Sitzes des Abtriebselements 21 auf der Welle 19 weiter zu erhöhen, kann das Abtriebselement 21 im montierten Zustand zwischen dem Wellenkopf 73 und einem Innenring 89 eines Lagers 91 des ersten Drehbewegungssensors 3 verklemmt sein. Dabei kann die Welle 19 mit dem Abtriebselement 21 so gehalten sein, dass beide Elemente immer noch gemeinsam um die Wellenachse W drehbar sind.

Im Folgenden ist auf weitere Details erfindungsgemäßer Abtriebselemente mit Verweis auf die Fig. 13 und 14 eingegangen. Bevorzugt ist das Abtriebselement 21 als Mitnehmerorgan 23 gebildet. Das Mitnehmerorgan 23 weist wenigstens eine schlitzförmige Aufnahme 93 für ein Antriebselement der Achse des Schienenfahrzeugs auf. Um das Mitnehmerorgan 23 kompakt zu halten, ist es bevorzugt als Mitnehmerscheibe 25 gebildet. Die Aufnahme 93 für ein Antriebselement erstreckt sich dann bevorzugt radial zur Wellenachse W in die Mitnehmerscheibe 25 hinein.

Fig. 14 zeigt eine zweite Ausführungsform einer erfindungsgemäßen Mitnehmerscheibe 25. Im Folgenden ist nur auf die Unterschiede zur mit Bezug auf die Fig. 13 beschriebene Mitnehmerscheibe eingegangen. Die Aufnahme 93 für ein Antriebselement der Achse des Schienenfahrzeugs ist von zwei elastisch auslenkbaren Zungen 95 begrenzt. Um die Zungen 95 elastisch zu gestalten, weist die Mitnehmerscheibe 25 zwei sich parallel zur schlitzförmigen Aufnahme 93 in die Mitnehmerscheibe hinein erstreckende Einbuchtungen 97 auf. Die Zungen 95 sind dann von der Aufnahme 93 und den Einbuchtungen 97 begrenzt. Freie Enden 99 der Zungen 95 sind in die Einbuchtungen 97 hinein auslenkbar. Die Zungen 95 sind innerhalb einer Scheibenebene E der Mitnehmerscheibe 25 auslenkbar. Die Aufnahme 93 weist einen Aufnahmendurchmesser 101 auf. Der Aufnahmendurchmesser 101 wird senkrecht zu den sich geradlinig erstreckenden Zungen 95 gemessen. Der Aufnahmedurchmesser 101 ist bevorzugt kleiner als ein Durchmesser eines Antriebselements der Achse des Schienenfahrzeugs. Wird ein Antriebselement in die Aufnahme 93 eingesetzt, so werden die Zungen 95 elastisch ausgelenkt, da das Antriebselement einen größeren Durchmesser als Aufnahme 93 aufweist. Auf diese Weise kann ein Antriebselement spielfrei in der Aufnahme 93 gehalten sein.

## Patentansprüche

1. Bewegungssensorsystem (1) zur Montage an der Achse eines Schienenfahrzeugs, mit wenigstens einer durch die Achse des Schienenfahrzeugs drehbaren ersten Welle (19) und mit wenigstens einer mit der ersten Welle (19) drehfest verbundenen Maßverkörperung (27) eines ersten Drehbewegungssensors (3), wobei die erste Welle (19) ein Abtriebselement (21) zum Abgreifen der Bewegung der Achse aufweist, **dadurch gekennzeichnet, dass** die erste Welle (19) zur Übertragung eines Drehmoments an einen zweiten Drehbewegungssensor (5) ausgestaltet ist.

2. Bewegungssensorsystem (1) nach Anspruch 1, **dadurch gekennzeichnet, dass** das Abtriebselement (21) durch ein sich an einem achsseitigen Ende (17) der ersten Welle (19) befindliches Mitnehmerorgan (23) gebildet ist.

3. Bewegungssensorsystem (1) nach Anspruch 1 oder 2, **dadurch gekennzeichnet, dass** das Abtriebselement (21) eine Aufnahmeöffnung (77) für die erste Welle (19) mit wenigstens einer Ausbuchtung (85) für wenigstens ein Formschlusselement (83) aufweist.

4. Bewegungssensorsystem (1) nach einem der Ansprüche 1 bis 3, **dadurch gekennzeichnet, dass** das Abtriebselement (21) wenigstens einen quer zur Wellenachse (W) verlaufenden Aufnahmeschlitz (93) zur Aufnahme eines Antriebselements der Achse des Schienenfahrzeugs aufweist, wobei der wenigstens eine Aufnahmeschlitz (93) zumindest an einer Seite von einer elastisch auslenkbaren Zunge (95) begrenzt ist.

5. Bewegungssensorsystem (1) nach einem der Ansprüche 1 bis 4, **dadurch gekennzeichnet, dass** die erste Welle (19) mit wenigstens einer weiteren Maßverkörperung (39) des zweiten Drehbewegungssensors (5) versehen ist.

6. Bewegungssensorsystem (1) nach einem der Ansprüche 1 bis 5, **dadurch gekennzeichnet, dass** die erste Welle (19) ein erstes Kupplungsteil (49) zur drehsteifen Verbindung mit einem zweiten Kupplungsteil (57) einer Welle (55) des zweiten Drehbewegungssensors (5) aufweist.

7. Bewegungssensorsystem (1) nach einem der Ansprüche 1 bis 6, **dadurch gekennzeichnet, dass** der erste Drehbewegungssensor (3) durch einen Inkrementaldrehgeber (31) gebildet ist.

8. Bewegungssensorsystem (1) nach Anspruch 7, **dadurch gekennzeichnet, dass** der Inkrementaldrehgeber (31) zur Ausgabe eines Rolliersignals ausgestaltet ist.

9. Bewegungssensorsystem (1) nach Anspruch 7 oder 8, **dadurch gekennzeichnet, dass** die Maßverkörperung (27) des ersten Drehbewegungssensors (3) durch eine Inkrementscheibe (29) gebildet ist.

10. Bewegungssensorsystem (1) nach einem der Ansprüche 1 bis 9, **dadurch gekennzeichnet, dass** der zweite Drehbewegungssensor (5) durch eine Vorrichtung (41) zur Erfassung einer Drehung in einem stromlosen Zustand des Schienenfahrzeugs gebildet ist.

11. Bewegungssensorsystem (1) nach Anspruch 10, **dadurch gekennzeichnet, dass** wenigstens eine Maßverkörperung (39) des zweiten Drehbewegungssensors (5) durch eine Nockenscheibe (43) gebildet ist.

12. Bewegungssensorsystem (1) nach einem der Ansprüche 1 bis 11, **dadurch gekennzeichnet, dass** in einem montierten Zustand je ein Drehbewegungssensor (3, 5) wenigstens abschnittsweise in einem zugehörigen Gehäuseteil (7, 9) angeordnet ist.

13. Bewegungssensorsystem (1) nach Anspruch 12, **dadurch gekennzeichnet, dass** wenigstens ein Drehbewegungssensor (3, 5) mit seinem zugehörigen Gehäuseteil (7, 9) ein austauschbares Sensormodul (61, 63) bildet.

14. Bewegungssensorsystem (1) nach Anspruch 13, **dadurch gekennzeichnet, dass** jeder Drehbewegungssensor (3, 5) eine eigene Datenleitung zur Übertragung von Sensorsignalen an wenigstens eine Kontrolleinrichtung aufweist.

15. Achse für ein Schienenfahrzeug, **dadurch gekennzeichnet, dass** die Achse an einem Achsende ein Bewegungssensorsystem (1) nach einem der Ansprüche 1 bis 14 aufweist.
